# EUROPÄISCHE PATENTSCHRIFT

(11) **EP 1 160 483 B1**
(45) Veröffentlichungstag und Bekanntmachung des Hinweises auf die Patenterteilung: **28.11.2007**
(21) Anmeldenummer: 01103305.7
(22) Anmeldetag: 13.02.2001
(51) Int. Cl.: F16F 13/10, F16F 13/16

(54) **Hydrolager**
Hydraulic support
Support hydraulique

(30) Priorität: 30.05.2000 DE 10037954
(43) Veröffentlichungstag der Anmeldung: 05.12.2001
(73) Patentinhaber: Carl Freudenberg KG, 69469 Weinheim (DE)
(72) Erfinder: Simuttis, Arnold, Dr., 55545 Bad Kreuznach (DE); Hettler, Werner, 68309 Mannheim (DE)

(56) Entgegenhaltungen:
- DE-A- 3 618 767
- FR-A- 2 587 429
- US-A- 4 424 960
- US-A- 5 139 241
- US-A- 5 911 412
- PATENT ABSTRACTS OF JAPAN vol. 015, no. 366 (M-1158), 13. September 1991 (1991-09-13) -& JP 03 144134 A (TOYODA GOSEI CO LTD;OTHERS: 02), 19. Juni 1991 (1991-06-19)

## Beschreibung

Die Erfindung betrifft ein Hydrolager mit einem Traglager und einem Auflager, die durch einen im wesentlichen kegelstumpfförmigen ersten Federkörper aus elastomerem Werkstoff aufeinander abgestützt sind und einen Arbeitsraum und einen Ausgleichsraum, die jeweils mit Dämpfungsflüssigkeit gefüllt und durch eine Trennwand voneinander getrennt sowie durch eine erste Dämpfungsöffnnung flüssigkeitsleitend verbunden sind. Ferner weist das Hydrolager die Merkmale des ein Leifeinden Teils des Patentanspruchs 1 auf. Aus DE-A-3618767 ist ein Hydrolager der Vorgenannten Art bekannt.

Aus DE 41 41 332 A1. ist beispielweise ein Hydrolagen bekannt, welches wird insbesondere als Motor- oder Getriebeaufhängungen in Kraftfahrzeugen verwendet Die Wirkung dieser Hydrolager erfolgt im wesentlichen axial in Richtung des Hydrolagers, wobei zur Dämpfung tieffrequenter, großamplitudiger Motorschwingungen Flüssigkeitsbestandteile durch die Dämpfungsöffnung zwischen Arbeitsraum und Ausgleichsraum hin- und herverlagert werden. Die Isolierung höherfrequenter, kleinamplitudiger Schwingungen, beispielsweise Schwingungen, die durch die Verbrennungskraftmaschine selbst angeregt werden, erfolgt beispielsweise durch eine innerhalb der Trennwand schwingfähig angeordnete Membran aus elastomerem Werkstoff.

In radialer Richtung des Hydrolagers werden Stützeffekte hauptsächlich durch örtlich harte Gummifederabschnitte des ersten Federkörpers erreicht, während Isolation durch örtlich weiche Gummifederabschnitte erzielt wird. Diese unterschiedliche Abstimmung des ersten Federkörpers auf verschiedenen Anforderungen macht einen hohen Aufwand für die Entwicklung entsprechender Elastomerfedern nötig. Das Ergebnis stellt trotzdem in jedem Fall nur einen Kompromiss dar, weil in radialer Richtung nur die Dämpfung des Werkstoffs des Federkörpers wirkt; die Auswahl an geeigneten Werkstoffen ist sehr eng begrenzt, da für eine gute axiale Dämpfungswirkung sehr niedrig dämpfende und nur wenig verhärtende Werkstoffe für den ersten Federkörper notwendig sind.

Aus FR-A-2 587 429 ist Hydrolagen mit zwei Dämpfungsöffnungen bekannt.

Der Erfindung liegt die Aufgabe zugrunde, eine Hydrolager der eingangs genannten Art derart weiterzuentwickeln, dass zusätzlich zu den guten Gebrauchseigenschaften des Hydrolagers in axialer Richtung auch gute Gebrauchseigenschaften hinsichtlich der Dämpfung in radialer Richtung zu verwirklichen sind, wobei insbesondere eine Dämpfung von Schwingungen in allen drei Raumrichtungen erreicht wird.

Diese Aufgabe wird erfindungsgemäß mit den Merkmalen von Anspruch 1 gelöst. Auf vorteilhafte Ausgestaltungen nehmen die Unteransprüche Bezug.

Bei dem erfindungsgemäßen Hydrolager ist von Vorteil, dass es einerseits in axialer Richtung die üblichen guten Gebrauchseigenschaften hinsichtlich der Dämpfung und der Isolierung von Schwingungen aufweist und andererseits zusätzlich eine gute Dämpfungswirkung in radialer Richtung, also quer zur Achse. Durch die zusätzliche Anordnung des Kammerpaares, wobei die beiden Kammern des Kammerpaares durch die zweite Dämpfungsöffnung flüssigkeitsleitend verbunden sind, können tieffrequente, großamplitude Schwingungen in radialer Richtung zusätzlich gedämpft werden.

Eine Dämpfung in radialer Richtung ist beispielsweise erforderlich, um Nickbewegungen eines längs in ein Kraftfahrzeug eingebauten Motors zu dämpfen. Auch Motorschüttelbewegungen bei quer eingebauten Motoren können durch die in radialer Richtung wirksame Dämpfung des Hydrolagers wirkungsvoll bedämpft werden. In Abhängigkeit vom jeweiligen Anwendungsfall und der Ausgestaltung der zweiten Drosselöffnung, besteht auch die Möglichkeit, Motorschiritelbewegungen durch eine Tilgerwirkung zu isolieren. Die dynamische Absenkung der Steifigkeit durch die Tilgerwirkung erlaubt vergleichsweise hohe radiale Federraten zum Abstützen des Motors in Fahrtrichtung, beispielsweise bei Beschleunigen und beim Bremsen, was dem Fahrkomfort sehr zu gute kommt.

Motorschüttelbewegungen bei längs in Kraftfahrzeuge eingebaute Motoren können durch das erfindungsgemäße Hydrolager in Fahrzeugquerrichtung gedämpft werden oder bei entsprechender Gestaltung der zweiten Dämpfungsöffnung durch eine Tilgerwirkung isoliert werden. Bei der Tilgung von Schwingungen ist außerdem von Vorteil, dass das Kurvenverhalten eines Kraftfahrzeugs durch eine höhere statische Federrate verbessert werden kann; das heißt der Motor geht nicht zu früh in radiale Anschläge, wodurch das Geräusch minimiert wird, und das Nachschwingen des Motors in Querrichtung wird verhindert.

Die zweite Dämpfungsöffnung ist als Tilgerkanal ausgebildet. Dabei weist die eine kurze Länge sowie einen großen Querschnitt auf, damit im Frequenzbereich zwischen 20 und 80 Hz eine dynamische Steifigkeit erreicht wird, die niedriger als die statische Steifigkeit ist Dafür ist denkbar, dass mehrere Tilgerkanäle in einer funktionstechnischen Parallelschaltung angeordnet sind.

Der Ferner begrenzen der erste und der zweite Federkörper zwei Kammerpaare die einander in axialer Richtung benachbart zugeordnet sind, wobei die Kammern eines jeden Kammerpaares quer zu der Achse im wesentlichen einander in radialer Richtung gegenüberliegend angeordnet und flüssigkeitsleitend verbunden sind, wobei die Kammerpaare um 90° zueinander versetzt angeordnet sind. Hierbei ist von Vorteil, dass eine Dämpfung von Schwingungen in allen drei Raumrichtungen ermöglicht wird. Für den Anwendungsfall in einem Kraftfahrzeug bedeutet das, dass eine Schwingungsdämpfung beispielsweise in Fahrtrichtung, quer zur Fahrtrichtung und senkrecht zur Fahrbahn erfolgt Die unerwünschte Übertragung von Schwingungen, beispielsweise in den Fahrgastraum des Kraftfahrzeugs, ist dabei besonders gering.

Der zweite Stützkörper und das Auflager können materialeinheitlich und / oder einstückig ausgebildet sein. Durch die einstückige Ausgestaltung ist das Hydrolager insgesamt kostengünstig herstellbar und weist einen teilearmen Aufbau auf. Sind der zweite Stützkörper und das Auflager demgegenüber zweiteilig ausgebildet, sind in radialer Richtung Hinterschneidungen herstellbar. Beim Entformen des Teils aus dem Vulkanisierwerkzeug wird weder das Teil selbst noch das Werkzeug beschädigt / zerstört.

Der erste und der zweite Federkörper können einstückig oder mehrteilig ausgebildet sein. Durch die einstückige Ausgestaltung der beiden Federkörper ist das Hydrolager einfach und kostengünstig herstellbar, wobei die Materialwahl hauptsächlich von den erforderlichen Federsteifigkeiten der Federkörper abhängt.

Die erste Dämpfungsöffnung kann beispielsweise kanalförmig ausgebildet sein und den Außenumfang der Trennwand bilden. Hierbei ist von Vorteil, dass durch die vergleichsweise große Kanallänge der Dämpfungsöffnung eine große Flüssigkeitsmasse zwischen dem Arbeitsraum und dem Ausgleichsraum hin- und herschwingt und daher niederfrequente Schwingungen mit großen Amplituden ausgezeichnet gedämpft werden können.

Der zweite Federkörper kann auf der dem Arbeitsraum axial abgewandten Seite des ersten Federkörpers angeordnet sein. Der erste Federkörper, das Traglager, das Auflager und die Trennwand begrenzen dabei den Arbeitsraum. Diese Ausgestaltung erlaubt eine höhere Dämpfung in axialer Richtung des Hydrolagers, da die Pumpwirkung des ersten Federkörpers, durch die im Vergleich zum zweiten Federkörper größere Federsteifigkeit auf die Dämpfungsflüssigkeit im Arbeitsraum verbessert ist.

Generell besteht jedoch auch die Möglichkeit, dass der zweite Federkörper auf der dem Arbeitsraum zugewandten Seite des ersten Federkörpers angeordnet ist. Durch die Anordnung des zweiten Federkörpers innerhalb des Hydrolagers wird der dünnere, zweite Federkörper zuverlässig vor äußeren Einflüssen geschützt. Die Gefahr einer Beschädigung ist dadurch auf ein Minimum begrenzt. Im axialen Zwischenraum zwischen den beiden Federkörpern sind die mit Dämpfungsflüssigkeit gefüllten Kammern des Kammerpaares angeordnet.

Der zweite Federkörper kann im wesentlichen rollbalgförmig ausgebildet sein. Sowohl beim Ein- oder Ausfedern in axialer Richtung als auch bei radialer Verlagerung des inneren Stützkörpers zum äußeren Stützkörper werden Gebrauchsdauer verringernde, schädliche Zugspannungen innerhalb des zweiten Federkörpers durch dessen rollbalgförmige Ausgestaltung zuverlässig verhindert. Das Hydrolager weist dadurch gleichbleibend gute Gebrauchseigenschaften während einer langen Gebrauchsdauer auf.

Der zweite Federkörper weist - im Längsschnitt betrachtet - eine kleinere Schnittfläche auf, als der erste Federkörper. Aus Sicherheitsgründen empfiehlt sich bei der Gummiteil-Metallteil-Konstruktion ein stabiler konischer erster Federkörper, der die statische Belastung allein tragen kann, wobei der zweite Federkörper die erforderlichen Blähsteifigkeiten für die Dämpfung / Tilgung in radialer Richtung des Hydrolager - in Verbindung mit den Blähsteifigkeiten des ersten Federkörpers - aufweist.

Die zweite Dämpfungsöffnung kann radial zwischen dem zweiten Stützkörper und den Kammern angeordnet sein. Dadurch, dass die zweite Dämpfungsöffnung für die radialer Wirkung des Hydrolager vorzugsweise im Bereich des äußeren Stützkörpers angeordnet ist, kann durch die große Länge der Dämpfungsöffnung und einen großen Querschnitt eine hohe Dämpfung bei geringer Volumensteifigkeit der Kammern erzeugt werden; eine dynamische Verhärtung des Hydrolagers bleibt dadurch gering. Die zweite Dämpfungsöffnung kann im Bereich der Kammern mit oder ohne additionelle Bauteile angeordnet sein. Außerdem bietet sich die Möglichkeit, die Kanäle zwischen äußerem Stützkörper und Auflager unterhalb der Kammern zu führen.

Nach einer anderen Ausgestaltung besteht die Möglichkeit, dass die zweite Dämpfungsöffnung radial zwischen dem ersten Stützkörper und den Kammern angeordnet ist. Die zweite Dämpfungsöffnung kann dabei eine vergleichsweise geringe Länge bei großem Querschnitt aufweisen, um eine Schwingungstilgung zu bewirken. Bei der Schwingungstilgung in einem Frequenzbereich zwischen 20 und 80 Hz wird eine dynamische Steifigkeit erreicht, die niedriger als die statische Steifigkeit ist.

Federkonstellationen mit einem ersten und einem zweiten Federkörper und Kammern dazwischen, die mittels Öffnungen in radialer Richtung dämpfen, können auch mit einer dritten Öffnung zwischen der axial wirkenden Arbeitskammer und dem Ausgleichsraum kombiniert werden, wobei ein erstes Stellelement diese dritte Öffnung je nach Betriebszustand des Fahrzeugs öffnet oder schließt. Das Öffnen bewirkt dann das Schwingen einer Flüssigkeitsmasse in der Öffnung, die einen hydraulischen Tilgereffekt zur Absenkung der dynamischen Steifigkeit des Lagers in axialer Richtung bewirkt. Das Stellelement kann dabei sowohl elektrisch, wie auch hydraulisch oder pneumatisch wirken.

Das Schließen der dritten Öffnung bewirkt die Funktion eines üblichen hydraulisch dämpfenden Lagers mit dem Vorteil der radialen Dämpfung.

Die oben genannte Tilgerfunktion setzt entweder eine starre Wand zwischen Arbeitskammer und Ausgleichsraum voraus oder zumindest eine gehaltene, jedoch blähfähige Membrane zwischen zwei Gitterbereichen. Will man die Akustik verbessern, ist es vorteilhaft diese Membrane beweglich zwischen den Gittern anzuordnen. Dann muss durch ein bewegliches Gitter die Membrane bei offener dritter Öffnung geklemmt und bei geschlossener dritter Öffnung mit Freiraum versehen werden.

Die frei bewegliche Membrane erlaubt eine erhebliche Absenkung der dynamischen Steifigkeit im akustisch wirksamen Frequenzbereich.

Der Antrieb des beweglichen Gitters erfolgt vorteilhafterweise durch das erste Stellelement, das auch die dritte Öffnung freigibt.

Da hydraulisch dämpfende Lager in Kraftfahrzeugen in der Regel schräg gestellt eingebaut werden und Verbrennungsmotoren im Leerlauf nicht nur Bewegungen in Zylinderrichtung sondern auch quer dazu ausführen ist von Vorteil für einen guten Schwingungskomfort, dass auch diese isoliert werden. Um dieses zu erreichen, wird dem Dämpfungskanal zwischen den radial wirkenden Kammern zwischen dem ersten und zweiten Federkörper entweder ein kurzer Kanal dazugeschaltet oder der Kanal verkürzt. Dieses kann durch ein zweites Stellelement erreicht werden, das elektrisch, pneumatisch oder hydraulisch wirkt.

### Kurzbeschreibung der Zeichnung

Das beanspruchte Hydrolager wird nachfolgend anhand der Figuren näher erläutert. Diese zeigen jeweils in schematischer Darstellung:
- Fig. 1: ein erstes Ausführungsbeispiel eines Hydrolagers mit einer kanalförmigen zweiten Dämpfungsöffnung,
- Fig. 2: einen Querschnitt durch das Hydrolager aus Fig. 1,
- Fig. 3: ein zweites Ausführungsbeispiel eines Hydrolagers, wobei die zweite Dämpfungsöffnung als Drosselöffnung ausgebildet ist,
- Fig. 4: das Hydrolager aus Fig. 3 in quergeschnittener Darstellung,
- Fig. 5: ein drittes Ausführungsbeispiel eines Hydrolagers, bei dem die zweite Dämpfungsöffnung zur Tilgung von Schwingungen durch zwei parallel angeordnete Kanäle gebildet ist, gestaltet durch Traglagerinsbesondere dessen äußeren Stützkörper und dem Auflager,
- Fig. 6: einen Querschnitt durch das Hydrolager aus Fig. 5,
- Fig. 7: ein viertes Ausführungsbeispiel eines Hydrolagers, wobei zur Reduzierung der radialen Schwingungen nur ein Kammerpaar vorgesehen ist,
- Fig. 8: einen Querschnitt durch das Hydrolager aus Fig. 7,
- Fig. 9: ein fünftes Ausführungsbeispiel eines Hydrolagers, bei dem zwei Kammerpaare zur Schwingungsreduzierung radialer Schwingungen vorgesehen sind,
- Fig. 10: einen Querschnitt durch das Hydrolager auf Fig. 9,
- Fig. 11: eine Variante von Fig. 9 mit einteiliger Ausführung des ersten und zweiten Federkörpers sowie Gitterbereichen und Membran,
- Fig. 12: zeigt einen Querschnitt des Hydrolagers von Fig. 11,
- Fig. 13: stellt schaltbare Lager dar, mit der Möglichkeit, die axiale und radiale Charakteristik umschalten zu können,
- Fig. 14: zeigt einen Bypass in radialer Richtung.

### Ausführung der Erfindung

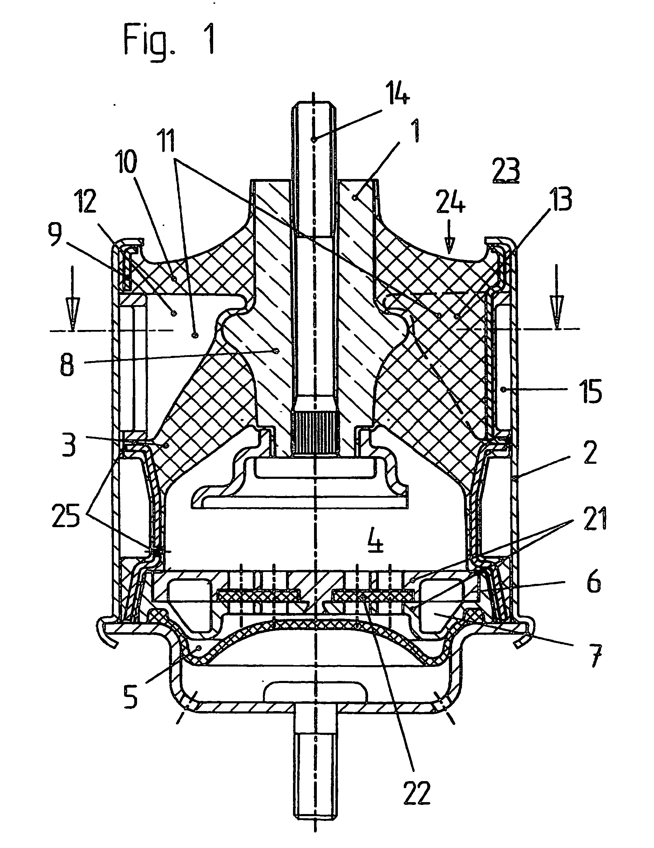

In den Fig. 1 bis 14 sind sechs verschiedene Hydrolager dargestellt, wobei in die gezeigten Hydrolager radial wirkende Kammern 12, 13; 19, 20 von Kammerpaaren 11, 18 integriert sind.

Jedes der gezeigten Hydrolager umfasst ein Traglager 1 und ein Auflager 2, die durch einen im wesentlichen kegelstumpfförmigen ersten Federkörper 3 aus elastomerem Werkstoff aufeinander abgestützt sind. Der erste Federkörper 3 ist als Tragfeder ausgebildet und weist im Vergleich zum zweiten Federkörper 10 eine größere Federsteifigkeit wegen einer zum Beispiel stärkeren Dimensionierung auf.

Die Hydrolager haben jeweils einen Arbeitsraum 4 und einen Ausgleichsraum 5, wobei der Arbeitsraum 4 und der Ausgleichsraum 5 durch eine kanalförmige erste Dämpfungsöffnung 7 flüssigkeitsleitend verbunden sind. Die Dämpfungsöffnung 7 erstreckt sich in den hier gezeigten Ausführungsbeispielen im Bereich des Außenumfangs der Trennwand 6, um eine möglichst große Masse an Dämpfungsflüssigkeit innerhalb der Dämpfungsöffnung 7 aufnehmen zu können. Durch die große Länge der kanalförmigen Dämpfungsöffnung 7 und durch den großen Querschnitt können großamplitudige, tieffrequente Schwingungen in ausgezeichneter Weise dadurch gedämpft werden, dass die Dämpfungsflüssigkeit innerhalb der Dämpfungsöffnung 7 in eine zur eingeleiteten Schwingung phasenverschobene Gegenschwingung versetzt wird.

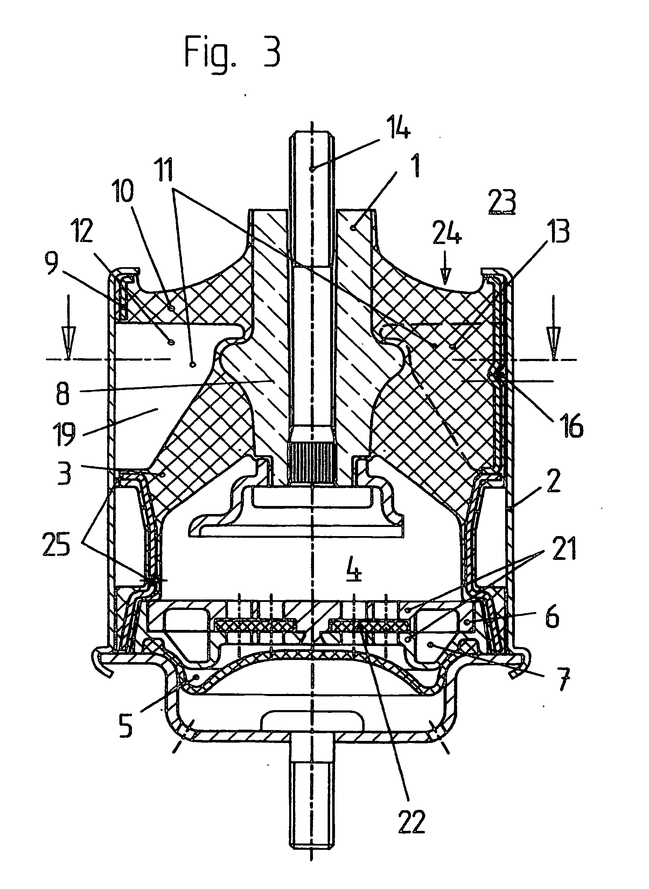

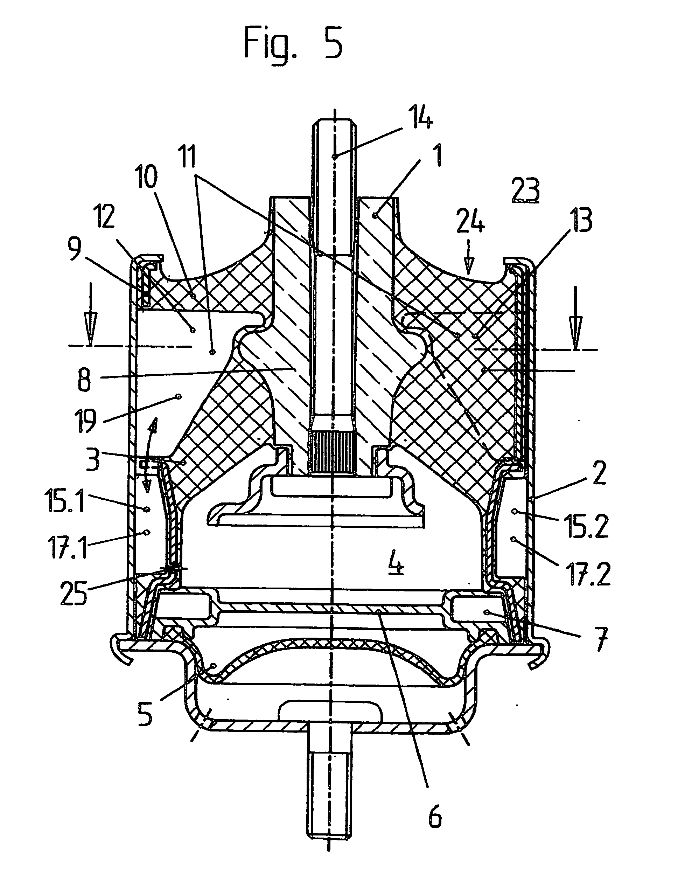

In den Fig. 1 und 3 ist die Trennwand 6 durch einen zweiteiligen Düsenkäfig gebildet, wobei im Zentrum der Trennwand 6 ein gitterförmiger zentraler Bereich 21 vorgesehen ist. Innerhalb der Trennwand 6 ist zur Isolierung höherfrequenter, kleinamplitudiger Schwingungen eine Membran 22 - in Abhängigkeit vom jeweiligen Anwendungsfall - vollkommen oder im wesentlichen flüssigkeitsdicht angeordnet. Während die Isolierung höherfrequenter, kleinamplitudiger Schwingungen ist die erste Dämpfungsöffnung 7 hydraulisch blockiert. Die Trennwand 6 kann, wie in Fig. 5 auch, einteilig und im zentralen Bereich völlig starr und flüssigkeitsdicht ausgeführt sein.

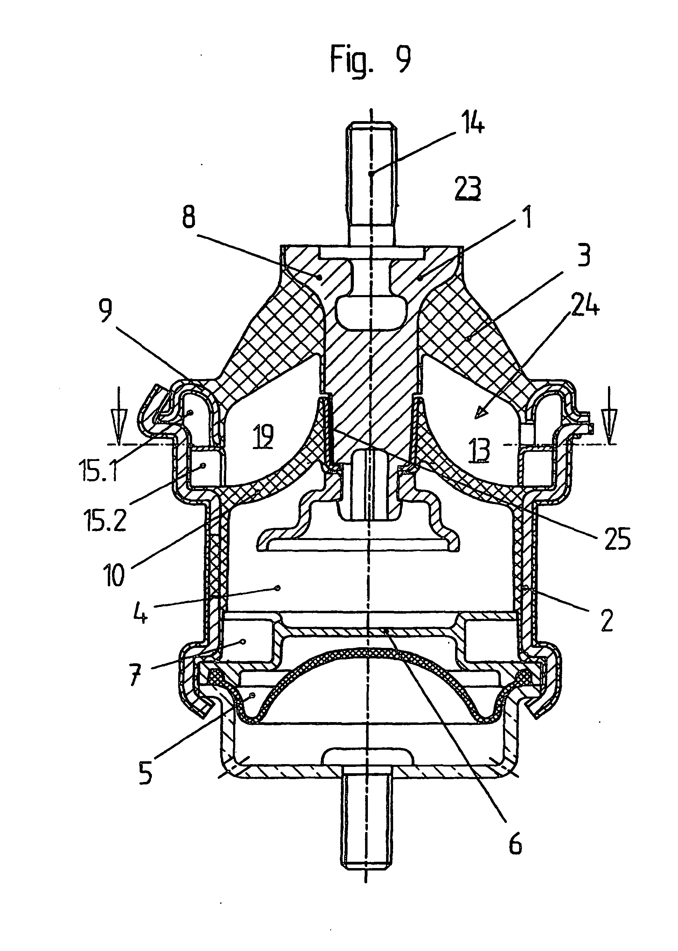

Bezüglich der Dämpfung tieffrequenter, großamplitudiger Schwingungen unterscheiden sich die beiden Ausführungsbeispiele Fig. 7 und 9 von den zuvor beschriebenen Ausführungsbeispielen nicht. Auch hier erfolgt die Dämpfung tieffrequenter, großamplitudiger Schwingungen durch eine Hin- und Herbewegung der in der kanalförmigen ersten Dämpfungsöffnung 7 angeordneten Flüssigkeitsmasse. Demgegenüber erfolgt die Isolierung von höherfrequenten, kleinamplitudigen Schwingungen in diesen Ausführungsbeispielen durch eine Membran 22, die einen Bestandteil der Wandung zwischen dem Arbeitsraum 4 und der Umgebung 23 bildet. Die Membran 22 besteht aus einem elastomeren Werkstoff und wird radial innenseitig vom elastomeren Werkstoff des zweiten Federkörpers 10 und radial außenseitig von der Gummierung des Auflagers 2 überdeckt und ist daher in radialer Richtung schwingfähig.

Zusätzlich zu der zuvor beschriebenen Hydrolager-Funktion weisen die in der Fig. 1 bis 10 gezeigten Hydrolager eine Dämpfungswirkung in radialer Richtung auf. Dazu ist das Traglager 1 als innerer erster Stützkörper 8 ausgebildet, der von einem äußeren zweiten Stützkörper 9 mit radialem Abstand umschlossen ist. In dem durch den Abstand gebildeten Spalt 24 ist nicht nur der erste Federkörper 3 sondern zusätzlich der zweite Federkörper 10 angeordnet, wobei die beiden Federkörper 3, 10 mit dem inneren Stützkörper 8 und dem äußeren Stützkörper 9 ein mit Dämpfungsflüssigkeit gefülltes Kammerpaar 11 begrenzen. Das Kammerpaar 11 besteht zumindest aus zwei Kammern 12, 13, die quer zu der Achse 14 im wesentlichen einander in radialer Richtung gegenüberliegend angeordnet sind, wobei die beiden Kammern 12, 13 durch die zweite Dämpfungsöffnung 15 flüssigkeitsleitend verbunden sind. Ein Kammerpaar 11 mit den Kammern 12, 13 ist in den Ausführungsbeispielen der Fig. 3 und 7 gezeigt.

Zwei Kammerpaare 11, 18 mit jeweils zwei Kammern 12, 13; 19 20 sind demgegenüber in den Ausführungsbeispielen gemäß der Fig. 1, 5 und 9 gezeigt.

Das beanspruchte Hydrolager weist eine integrierte hydraulisch dämpfende Hülsengummifeder auf, zur Dämpfung oder Tilgung von in radialer Richtung in das Hydrolager eingeleiteten Schwingungen. In Abhängigkeit von der Anzahl der Kammerpaare und deren geometrischer Zuordnung zu einander, können Schwingungen in mehreren radialen Richtungen gedämpft / getilgt werden, wobei, wie in den Fig. 1, 5 und 9 gezeigt, die Kammerpaare 11, 18 einander in axialer Richtung benachbart zugeordnet sind. Die Kammern 12, 13; 19, 20 eines jeden Kammerpaares 11, 18 sind einander quer zur Achse 14 im wesentlichen in radialer Richtung gegenüberliegend angeordnet und flüssigkeitsleitend verbunden, wobei die Kammerpaare 11, 18 um 90° zueinander versetzt angeordnet sind. Durch den 90°-Versatz der Kammerpaare 11, 18 zueinander und die zusätzliche Funktion des Hydrolagers in axialer Richtung, vermag das beanspruchte Hydrolager Schwingungen in allen Raumrichtungen zu dämpfen / zu tilgen.

In allen Ausführungsbeispielen sind der zweite Stützkörper 9 und das Auflager 2 zweiteilig ausgeführt und flüssigkeitsdicht aneinander festgelegt.

In den Fig. 1, 3, 5 und 11 sind die beiden Federkörper 3, 10 materialeinheitlich und einstückig ausgebildet und am inneren ersten Stützkörper 8 anvulkanisiert.

In Fig. 1 ist das erste Ausführungsbeispiel eines Hydrolagers gezeigt. Der erste Federkörper 3 ist als Tragfeder ausgebildet und im Vergleich zum zweiten Federkörper 10 stärker ausgebildet. Der zweite Federkörper 10 ist auf der dem Arbeitsraum 4 abgewandten Seite des ersten Federkörpers angeordnet. Dadurch, dass der Arbeitsraum 4 durch den als Tragfeder ausgebildeten ersten Federkörper 3 begrenzt ist und der erste Federkörper 3 im Vergleich zum zweiten Federkörper 10 eine vergleichsweise große Blähsteifigkeit aufweist, wird eine ausgezeichnete Dämpfung des Hydrolagers in axialer Richtung erreicht. Das erste Kammerpaar 11 mit den Kammern 12, 13 ist durch die zweite Dämpfungsöffnung 15 miteinander verbunden, das zweite Kammerpaar 18 besteht aus den Kammern 19 und 20. Zum statischen Druckausgleich sind Ausnehmungen 25 mit sehr kleinen Querschnitten vorgesehen, so dass unzulässig hohe Drücke auf die Federkörper 3, 10 vermieden werden. Die Ausnehmungen 25 verbinden das zweite Kammerpaar 18 mit dem Arbeitsraum 5.

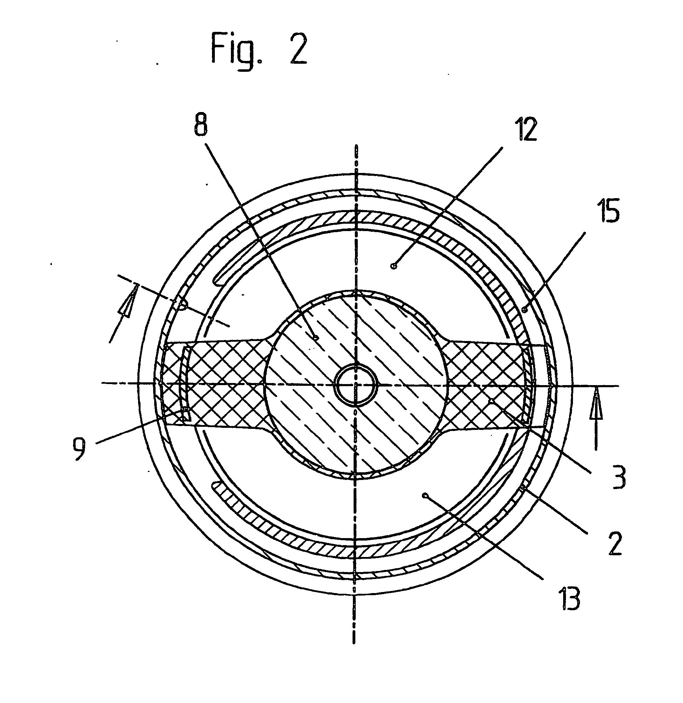

In Fig. 2 ist ein Querschnitt durch das Hydrolager aus Fig. 1 dargestellt.

In Fig. 3 ist ein zweites Ausführungsbeispiel eines Hydrolagers gezeigt. Das Hydrolager aus Fig. 3 unterscheidet sich vom zuvor beschriebenen Hydrolager aus Fig. 1 dadurch, dass nur ein Kammerpaar 11 mit den Kammern 12, 13 vorgesehen ist, die durch die zweite Dämpfungsöffnung 15 miteinander verbunden sind. Die zweite Dämpfungsöffnung 15 ist als Drosselöffnung ausgebildet und in radialer Richtung zwischen dem zweiten Stützkörper 9 und den Kammern 12, 13 angeordnet. Die Drosselöffnung hat einen kleinen Querschnitt, durch den zur Dämpfung radialer Schwingungen Dämpfungsflüssigkeit von Kammer 12 in Kammer 13 und wieder zurück gepresst wird.

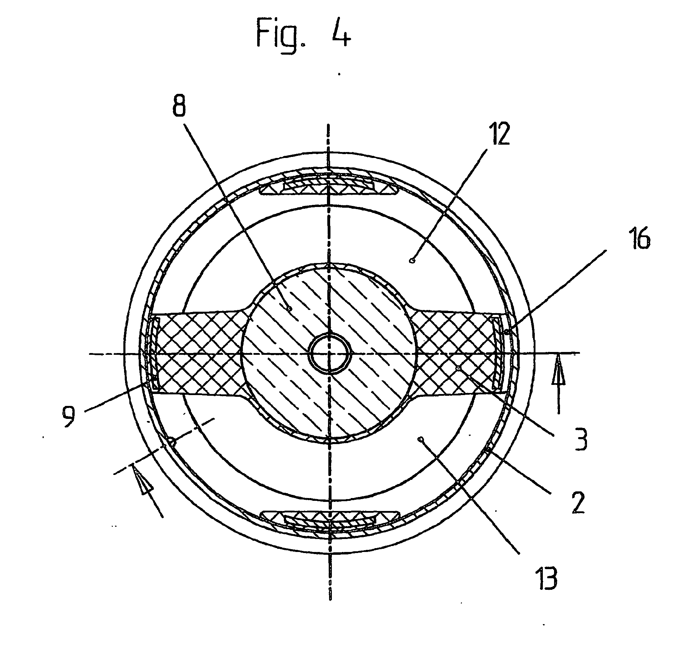

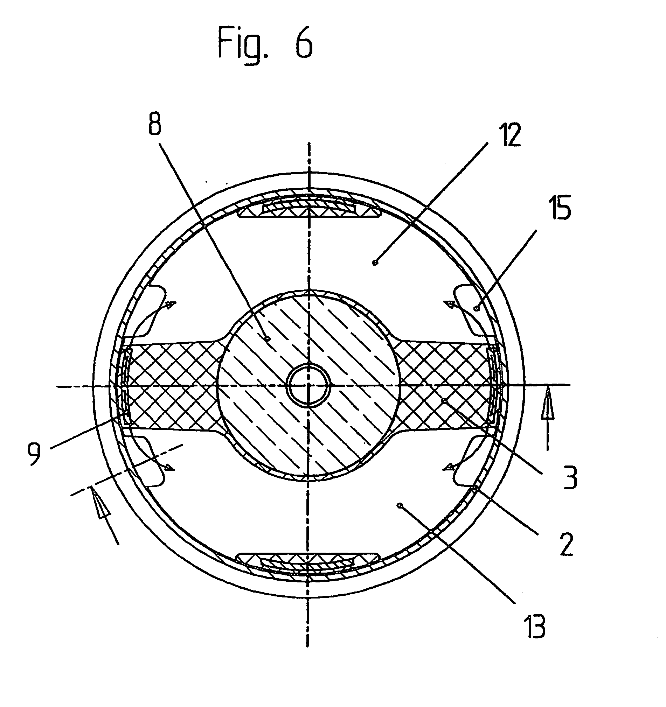

In Fig. 4 ist ein Querschnitt durch das Hydrolager aus Fig. 3 gezeigt, mit der Drosselöffnung zwischen den beiden Kammern 12, 13.

In Fig. 5 ist ein drittes Ausführungsbeispiel eines Hydrolagers gezeigt, das sich von den beiden zuvor beschriebenen Ausführungsbeispielen dadurch unterscheidet, dass die zweite Dämpfungsöffnung aus zwei funktionstechnisch parallel geschalteten Kanälen 17 zur Tilgung radial eingeleiteter Schwingungen besteht. Im Vergleich zur zuvor beschriebenen drosselförmigen Dämpfungsöffnung 15 weisen die Dämpfungsöffnungen in diesem Ausführungsbeispiel einen deutlichen größeren Querschnitt auf. Die innerhalb der zweiten Dämpfungsöffnung 15, die aus den beiden Teilöffnungen 15.1 und 15.2 besteht, angeordnete Dämpfungsflüssigkeit schwingt bei Einleitung radialer Schwingungen phasenverschoben zwischen den Kammern 12, 13 hin und her und bewirkt dadurch eine Tilgung der eingeleiteten Schwingungen.

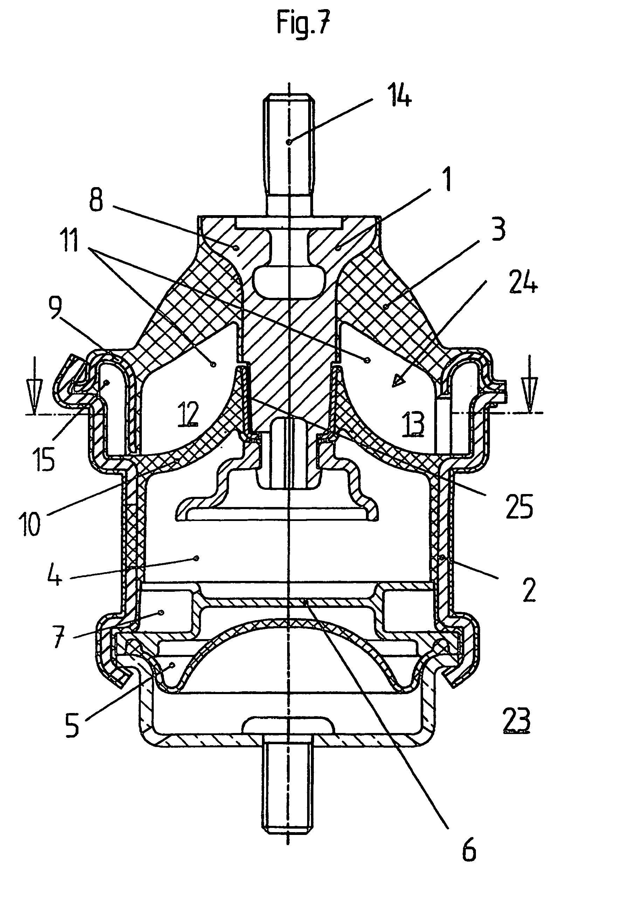

In Fig. 6 ist die zweiteilig ausgebildete zweite Dämpfungsöffnung 15, 15.1, 15.2 im Querschnitt zu erkennen.

In Fig. 7 ist ein viertes Ausführungsbeispiel des Hydrolagers gezeigt. Es unterscheidet sich von den zuvor beschriebenen Ausführungsbeispielen dadurch, dass der schwächer ausgebildete zweite Federkörper 10 auf der dem Arbeitsraum 4 zugewandten Seite des ersten Federkörpers 3 angeordnet ist. Der zweite Federkörper 10 ist im wesentlichen rollbalgförmig ausgebildet. Dadurch werden bei axialen Verlagerungen des Traglagers 1 relativ zum Auflager 2 unerwünscht hohe mechanische Belastungen des zweiten Federkörpers 10 vermieden. Die beiden Kammern 12, 13 des Kammerpaars 11 sind durch die zweite Dämpfungsöffnung 15 miteinander verbunden.

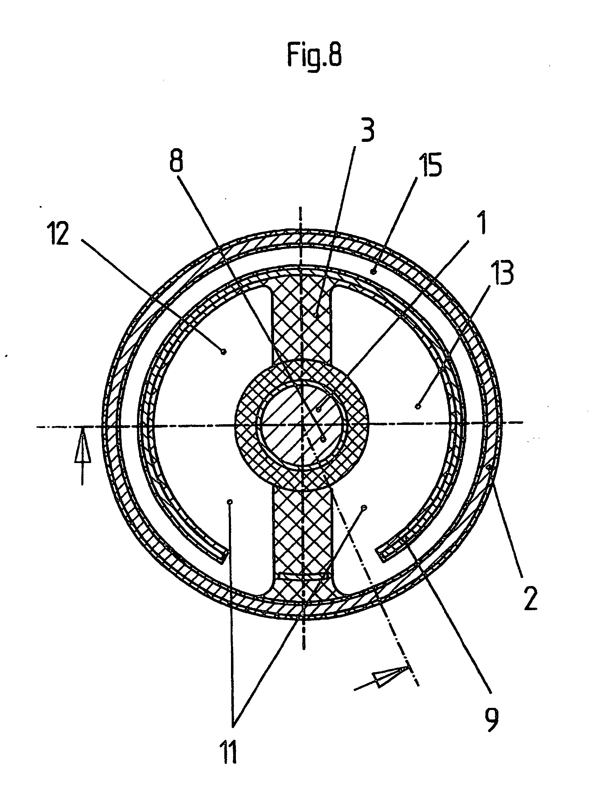

In Fig. 8 ist ein Querschnitt durch das Hydrolager aus Fig. 7 gezeigt. Die zweite Dämpfungsöffnung 15 ist kanalförmig ausgebildet und erstreckt sich nahezu entlang des gesamten Umfangs des Hydrolagers. Eine Schwingungsdämpfung der radial eingeleiteten Schwingungen erfolgt durch eine phasenverschobene Hin- und Herbewegung der innerhalb der zweiten Dämpfungsöffnung 15 angeordneten Dämpfungsflüssigkeit.

Das fünfte Ausführungsbeispiel eines Hydrolagers aus Fig. 9 unterscheidet sich von dem zuvor beschriebenen dadurch, dass in axialer Richtung hintereinanderliegend zwei Kammerpaare 11, 18 mit ihren jeweiligen Kammern 12, 13; 19, 20 angeordnet sind.

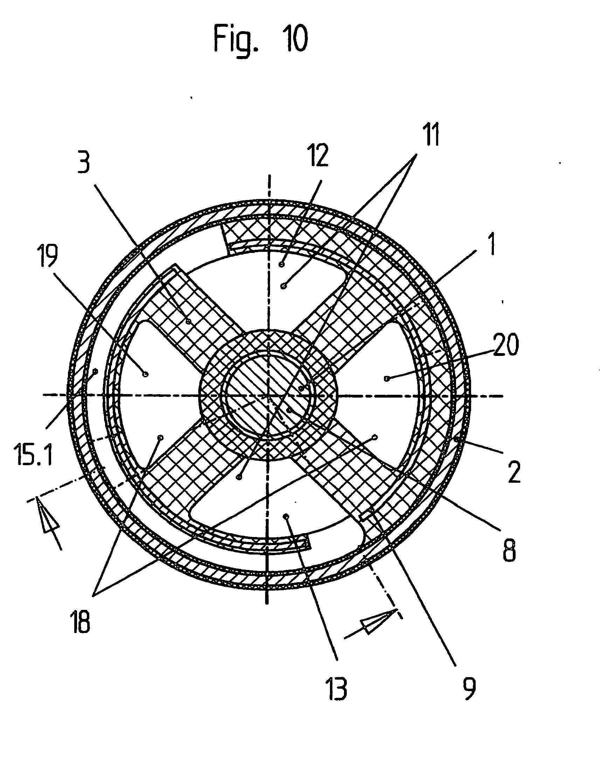

In Fig. 10 ist ein Querschnitt durch das Hydrolager aus Fig. 9 gezeigt. Die Kammern 12, 13; 19, 20 eines jeden Kammerpaares 11, 18 sind quer zu der Achse 14 einander im wesentlichen in radialer Richtung gegenüberliegend angeordnet und flüssigkeitsleitend verbunden, wobei die Kammerpaare 11, 18 um 90° zueinander versetzt angeordnet sind. Dieses Hydrolager dämpft Schwingungen, in allen drei Raumrichtungen.

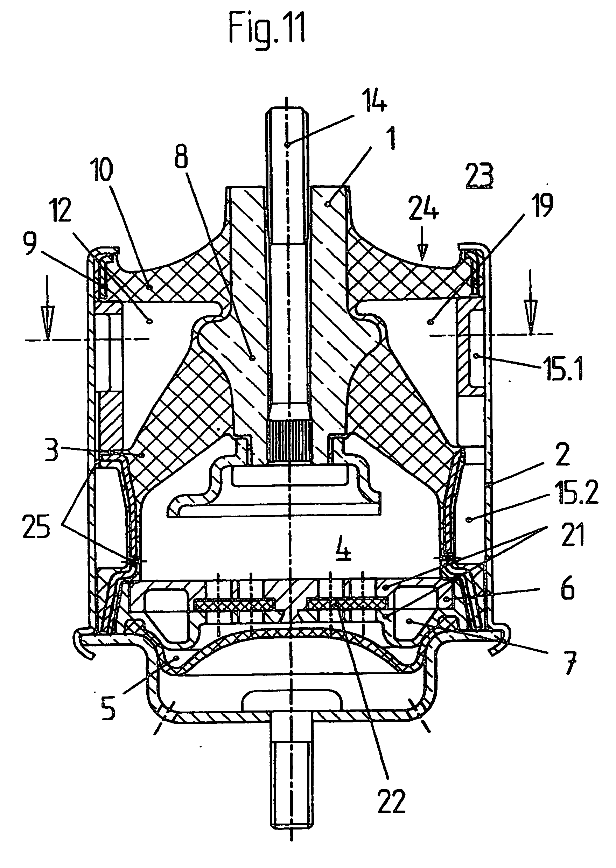

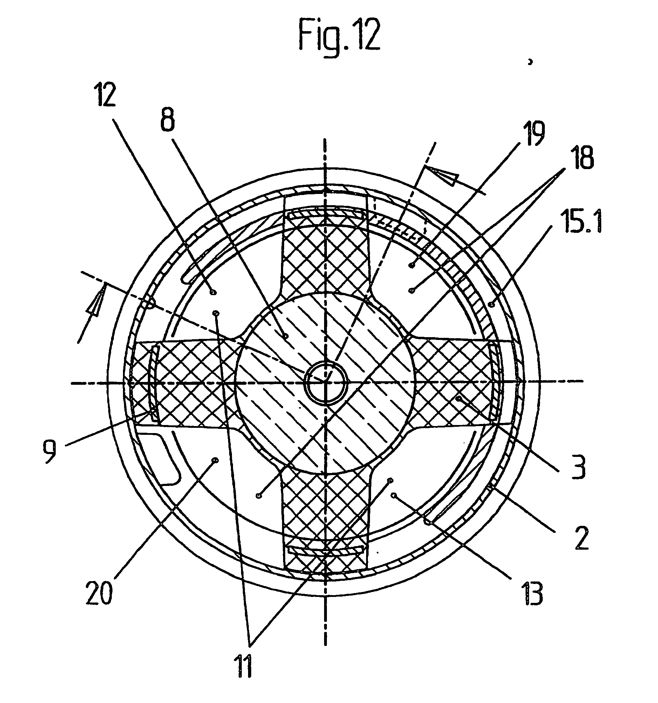

In Fig. 11 und Fig. 12 (Querschnitt aus Fig. 11) sind die vier radial wirkenden Kammern 12, 13, 19, 20 in einer Federkombination mit innen liegendem erstem Federkörper 3 und außen liegendem zweitem Federkörper 10 und einem Entkopplungssystem aus Gitterbereich 21 und Membrane 22 dargestellt. Diese Kombination ergibt eine dreiaxiale Dämpfung mit besonders guter Pumpwirkung bei axialer Dämpfung und Vermeidung von niederfrequentem Brummen durch das Entkopplungssystem.

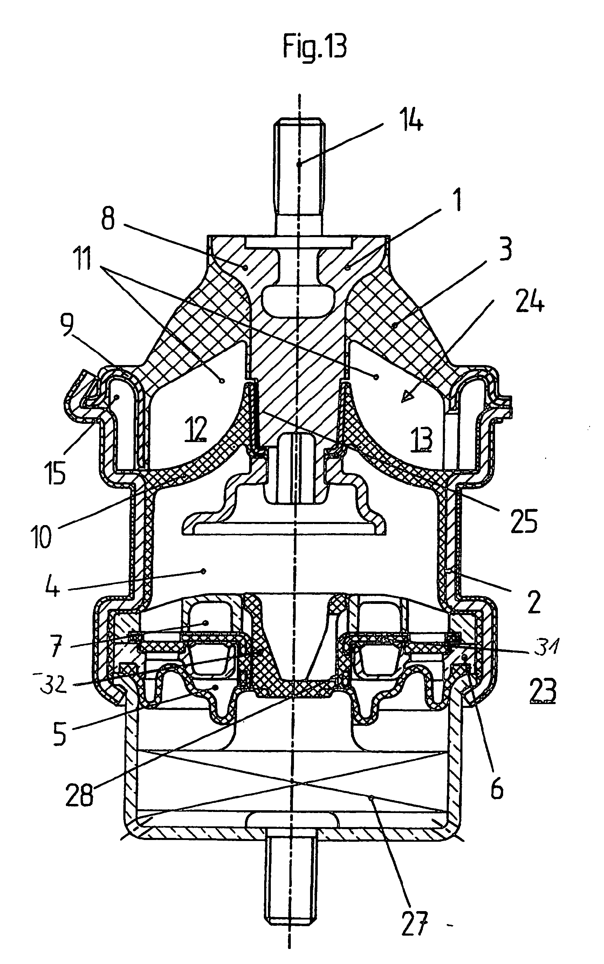

In Fig. 13 ist dargestellt, dass ein Lager der oben genannten Ausführung auch hinsichtlich der axialen Eigenschaften umschaltbar ausgeführt werden kann. Dabei wird eine zusätzliche Öffnung 28 durch ein erstes Stellelement elektrischer, hydraulischer oder pneumatischer Art 27 freigegeben oder geschlossen. Dieses wird benutzt, um zum Beispiel im Leerlauf eines Kraftfahrzeugmotors die dynamische Steifigkeit in axialer Richtung zu reduzieren, in dem dieser Bypass 28 geöffnet wird.
Außerdem kann durch ein zweites Stellelement 29 die Länge der zweiten Dämpfungsöffnung 15 durch einen zweiten Bypass 30 so verkürzt werden, dass aus der Dämpfungsöffnung der großen Länge eine Tilgerwirkung der kurzen Länge wird. Damit kann die axiale Tilgung durch radiale Tilgung ergänzt werden und zum Beispiel ein Motorschütteln besonders wirkungsvoll isoliert werden.

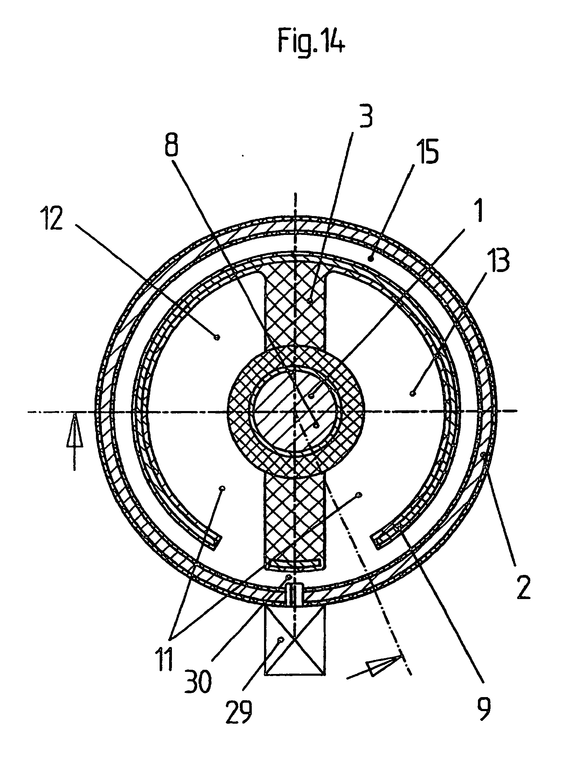

In Fig. 14 ist ein zweiter Bypass 30 vorgesehen, wobei der zweite Bypass 30 durch das zweite Stellelement 29 bedarfsweise verschließbar oder in Offenstellung bringbar ist. Durch die Betätigung des zweiten Stellelements 29 kann der Öffnungsquerschnitt des Bypasses 30 an die jeweiligen Gegebenheiten des Anwendungsfalles eingestellt werden, wobei dadurch eine Tilgerwirkung in radialer Richtung erzeugt wird.

## Patentansprüche

1. Hydrolager mit einem Traglager (1) und einem Auflager (2), die durch einen im wesentlichen kegelstumpfförmigen ersten Federkörper (3) aus elastomerem Werkstoff aufeinander abgestützt sind und einen Arbeitsraum (4) und einen Ausgleichsraum (5), die jeweils mit Dämpfungsflüssigkeit gefüllt und durch eine Trennwand (6) voneinander getrennt sowie durch eine erste Dämpfungsöffnung (7) flüssigkeitsleitend verbunden sind, wobei das Traglager (1) als innerer erster Stützkörper (8) ausgebildet ist, der von einem äußeren zweiten Stützkörper (9) mit radialem Abstand umschlossen ist, der erste (8) und der zweite Stützkörper (9) durch den ersten Federkörper (3) und einen zweiten Federkörper (10) verbunden sind, der erste Federkörper (3) und der zweite Federkörper (10) wenigstens zwei mit Dämpfungsflüssigkeit gefüllte Kammern (12, 13) begrenzen, und die Kammern (12, 13) quer zu der Achse (14) im wesentlichen einander in radialer Richtung gegenüberliegend angeordnet und durch mindestens eine zweite Dämpfungsöffnung (15) flüssigkeitsleitend verbunden sind, **dadurch gekennzeichnet, daß** der erste (3) und der zweite Federkörper (10) zwei Kammerpaare (11, 18) begrenzen, die einander in axialer Richtung benachbart zugeordnet sind, daß die Kammern (12, 13; 19, 20) jeweils Kammerpaare (11, 18) bilden, daß die Kammern (12, 13; 19, 20) eines jeden Kammerpaars (11, 18) quer zu der Achse (14) im wesentlichen einander in radialer Richtung gegenüberliegend angeordnet und flüssigkeitsleitend verbunden sind und daß die Kammerpaare (11, 18) um 90° zueinander versetzt angeordnet sind, wobei die zweite Dämpfungsöffnung (15) als Tilgerkanal (17) ausgebildet ist.

2. Hydrolager nach Anspruch 1, **dadurch gekennzeichnet, daß** der zweite Stützkörper (9) und das Auflager (2) materialeinheitlich und/oder einstückig ausgebildet sind.

3. Hydrolager nach einem der Ansprüche 1 oder 2, **dadurch gekennzeichnet, daß** der erste (3) und der zweite Federkörper (10) materialeinheitlich und/oder einstückig ausgebildet sind.

4. Hydrolager nach einem der Ansprüche 1 bis 3, **dadurch gekennzeichnet, daß** die erste Dämpfungsöffnung (7) kanalförmig ausgebildet ist.

5. Hydrolager nach einem der Ansprüche 1 bis 4, **dadurch gekennzeichnet, daß** der zweite Federkörper (10) auf der dem Arbeitsraum (4) axial abgewandten Seite des ersten Federkörpers (3) angeordnet ist.

6. Hydrolager nach Anspruch 5, **dadurch gekennzeichnet, daß** der erste Federkörper (3), das Traglager (1), das Auflager (2) und die Trennwand (6) den Arbeitsraum (4) begrenzen.

7. Hydrolager nach einem der Ansprüche 1 bis 4, **dadurch gekennzeichnet, daß** der zweite Federkörper (10) auf der dem Arbeitsraum (4) zugewandten Seite des ersten Federkörpers (3) angeordnet ist und mit dem Traglager (1), dem Auflager (2) und der Trennwand (6) den Arbeitsraum (4) begrenzt.

8. Hydrolager nach einem der Ansprüche 1 bis 7, **dadurch gekennzeichnet, daß** der zweite Federkörper (10) im wesentlichen rollbalgförmig ausgebildet ist.

9. Hydrolager nach einem der Ansprüche 1 bis 8, **dadurch gekennzeichnet, daß** der zweite Federkörper (10) - im Längsschnitt betrachtet - eine kleinere Schnittfläche aufweist, als der erste Federkörper (3).

10. Hydrolager nach einem der Ansprüche 1 bis 9, **dadurch gekennzeichnet, daß** die zweite Dämpfungsöffnung (15) radial zwischen dem zweiten Stützkörper (9) und den Kammern (12, 13; 19, 20) angeordnet ist.

11. Hydrolager nach einem der Ansprüche 1 bis 10, **dadurch gekennzeichnet, daß** die zweite Dämpfungsöffnung (15) radial zwischen dem ersten Stützkörper (8) und den Kammern (12, 13; 19, 20) angeordnet ist.

12. Hydrolager nach einem der Ansprüche 1 bis 11, **dadurch gekennzeichnet, daß** zwischen der Arbeitskammer (4) und der Ausgleichskammer (5) ein erstes Stellelement (27) angeordnet ist, durch das zur Tilgung von Schwingungen ein erster Bypass (28) in Offenstellung bringbar ist.

13. Hydrolager nach einem der Ansprüche 1 bis 12, **dadurch gekennzeichnet, daß** die Trennwand (6) eine durch das erste Stellelement (27) schaltbare Klemmscheibe (31) umfaßt, wobei die Klemmscheibe (31) mittels eines mit dem ersten Stellelement (27) verbundenen Mitnehmers (32) betätigbar ist.

14. Hydrolager nach einem der Ansprüche 1 bis 13, **dadurch gekennzeichnet, daß** zwischen den Kammern (12, 13) ein zweiter Bypass (30) angeordnet ist, durch den die Kammern (12, 13) strömungsleitend verbunden sind, wobei der Bypass durch ein zweites Stellelement (29) verschließbar ist.

## Claims

1. Hydraulic mount with a supporting bearing (1) and with a bearer (2) which are supported one on the other by means of an essentially frustoconical first spring body (3) consisting of elastomeric material and delimit a working space (4) and a compensating space (5) which are filled in each case with damping fluid and are separated from one another by means of a partition (6) and are connected in a fluid-conducting manner by means of a first damping orifice (7), the supporting bearing (1) being designed as an inner first supporting body (8) which is surrounded with a radial clearance by an outer second supporting body (9), the first (8) and the second (9) supporting body being connected by means of the first spring body (3) and a second spring body (10), the first spring body (3) and the second spring body (10) delimiting at least two chambers (12, 13) filled with damping fluid, and the chambers (12, 13) being arranged essentially opposite one another in the radial direction transversely with respect to the axis (14) and being connected in a fluid-conducting manner by means of at least one second damping orifice (15), **characterized in that** the first (3) and the second (10) spring body delimit two pairs of chambers (11, 18) which are assigned to one another adjacently in the axial direction, **in that** the chambers (12, 13; 19, 20) in each case form pairs of chambers (11, 18), **in that** the chambers (12, 13; 19, 20) of each pair of chambers (11, 18) are arranged essentially opposite one another in the radial direction transversely with respect to the axis (14) and are connected in a fluid-conducting manner, and **in that** the pairs of chambers (11, 18) are arranged so as to be offset at 90° with respect to one another, the second damping orifice (15) being designed as a vibration absorber duct (17).

2. Hydraulic mount according to Claim 1, **characterized in that** the second supporting body (9) and the bearer (2) are produced in a materially unitary manner and/or in one piece.

3. Hydraulic mount according to either one of Claims 1 and 2, **characterized in that** the first (3) and the second (10) spring body are produced in a materially unitary manner and/or in one piece.

4. Hydraulic mount according to one of Claims 1 to 3, **characterized in that** the first damping orifice (7) is of duct-shaped design.

5. Hydraulic mount according to one of Claims 1 to 4, **characterized in that** the second spring body (10) is arranged on that side of the first spring body (3) which faces axially away from the working space (4).

6. Hydraulic mount according to Claim 5, **characterized in that** the first spring body (3), the supporting bearing (1), the bearer (2) and the partition (6) delimit the working space (4).

7. Hydraulic mount according to one of Claims 1 to 4, **characterized in that** the second spring body (10) is arranged on that side of the first spring body (3) which faces the working space (4) and, together with the supporting bearing (1), the bearer (2) and the partition (6), delimits the working space (4).

8. Hydraulic mount according to one of Claims 1 to 7, **characterized in that** the second spring body (10) is designed essentially in the form of a concertina.

9. Hydraulic mount according to one of Claims 1 to 8, **characterized in that** the second spring body (10) has a smaller sectional plane than the first spring body (3), as seen in longitudinal section.

10. Hydraulic mount according to one of Claims 1 to 9, **characterized in that** the second damping orifice (15) is arranged radially between the second supporting body (9) and the chambers (12, 13; 19, 20).

11. Hydraulic mount according to one of Claims 1 to 10, **characterized in that** the second damping orifice (15) is arranged radially between the first supporting body (8) and the chambers (12, 13; 19, 20).

12. Hydraulic mount according to one of Claims 1 to 11, **characterized in that**, between the working chamber (4) and the compensating chamber (5), a first actuating element (27) is arranged, by means of which a first bypass (28) can be brought into the open position for the absorption of vibrations.

13. Hydraulic mount according to one of Claims 1 to 12, **characterized in that** the partition (6) comprises a clamping disc (31) switchable by means of the first actuating element (27), the clamping disc (31) being actuable by means of a driver (32) connected to the first actuating element (27).

14. Hydraulic mount according to one of Claims 1 to 13, **characterized in that**, between the chambers (12, 13), a second bypass (30) is arranged, by means of which the chambers (12, 13) are connected in a flow-conducting manner, the bypass being closable by means of a second actuating element (29).

## Revendications

1. Palier hydraulique, comprenant un palier porteur (1) et un élément d'appui (2) qui s'appuient l'un sur l'autre par un premier corps élastique (3) essentiellement tronconique en matériau élastomère, et comprenant une chambre de travail (4) et une chambre de compensation (5) qui sont respectivement remplies de liquide d'amortissement et qui sont séparées l'une de l'autre par une cloison séparatrice (6) et sont reliées fluidiquement par une première ouverture d'amortissement (7), sachant que le palier porteur (1) est réalisé sous forme de premier corps de soutien (8), intérieur, qui est entouré à distance radiale par un deuxième corps de soutien (9), extérieur, que le premier corps de soutien (8) et le deuxième corps de soutien (9) sont reliés par le premier corps élastique (3) et par un deuxième corps élastique (10), que le premier corps élastique (3) et le deuxième corps élastique (10) délimitent au moins deux compartiments (12, 13) remplis de liquide d'amortissement, et que les compartiments (12, 13) sont disposés essentiellement en vis-à-vis en direction radiale transversalement à l'axe (14) et sont reliés fluidiquement par au moins une deuxième ouverture d'amortissement (15), **caractérisé en ce que** le premier corps élastique (3) et le deuxième corps élastique (10) délimitent deux paires de compartiments (11, 18) qui sont mutuellement associées en voisinage en direction axiale, **en ce que** les compartiments (12, 13 ; 19, 20) forment respectivement des paires de compartiments (11, 18), **en ce que** les compartiments (12, 13 ; 19, 20) de chaque paire de compartiments (11, 18) sont disposés essentiellement en vis-à-vis en direction radiale transversalement à l'axe (14) et sont reliés fluidiquement, et **en ce que** les paires de compartiments (11, 18) sont disposées en étant mutuellement décalées de 90°, sachant que la deuxième ouverture d'amortissement (15) est réalisée sous forme de canal d'absorption (17).

2. Palier hydraulique selon la revendication 1, **caractérisé en ce que** le deuxième corps de soutien (9) et l'élément d'appui (2) sont réalisés dans le même matériau et/ou d'un seul tenant.

3. Palier hydraulique selon l'une des revendications 1 ou 2, **caractérisé en ce que** le premier corps élastique (3) et le deuxième corps élastique (10) sont réalisés dans le même matériau et/ou d'un seul tenant.

4. Palier hydraulique selon l'une quelconque des revendications 1 à 3, **caractérisé en ce que** la première ouverture d'amortissement (7) est réalisée sous forme de canal.

5. Palier hydraulique selon l'une quelconque des revendications 1 à 4, **caractérisé en ce que** le deuxième corps élastique (10) est disposé sur le côté du premier corps élastique (3) qui est axialement opposé à la chambre de travail (4).

6. Palier hydraulique selon la revendication 5, **caractérisé en ce que** le premier corps élastique (3), le palier porteur (1), l'élément d'appui (2) et la cloison séparatrice (6) délimitent la chambre de travail (4).

7. Palier hydraulique selon l'une quelconque des revendications 1 à 4, **caractérisé en ce que** le deuxième corps élastique (10) est disposé sur le côté du premier corps élastique (3) qui est tourné vers la chambre de travail (4) et délimite la chambre de travail (4) avec le palier porteur (1), l'élément d'appui (2) et la cloison séparatrice (6).

8. Palier hydraulique selon l'une quelconque des revendications 1 à 7, **caractérisé en ce que** le deuxième corps élastique (10) est réalisé essentiellement sous forme de soufflet roulant.

9. Palier hydraulique selon l'une quelconque des revendications 1 à 8, **caractérisé en ce que** le deuxième corps élastique (10) présente - considéré en coupe longitudinale - une plus petite surface de coupe que le premier corps élastique (3).

10. Palier hydraulique selon l'une quelconque des revendications 1 à 9, **caractérisé en ce que** la deuxième ouverture d'amortissement (15) est disposée radialement entre le deuxième corps de soutien (9) et les compartiments (12, 13 ; 19, 20).

11. Palier hydraulique selon l'une quelconque des revendications 1 à 10, **caractérisé en ce que** la deuxième ouverture d'amortissement (15) est disposée radialement entre le premier corps de soutien (8) et les compartiments (12, 13 ; 19, 20).

12. Palier hydraulique selon l'une quelconque des revendications 1 à 11, **caractérisé en ce qu'**un premier élément de commande (27) est disposé entre la chambre de travail (4) et la chambre de compensation (5), élément par lequel une première dérivation (28) peut être amenée en position ouverte afin d'amortir les vibrations.

13. Palier hydraulique selon l'une quelconque des revendications 1 à 12, **caractérisé en ce que** la cloison séparatrice (6) comprend un disque de serrage (31) pouvant être commuté par le premier élément de commande (27), le disque de serrage (31) pouvant être actionné au moyen d'un entraîneur (32) relié au premier élément de commande (27).

14. Palier hydraulique selon l'une quelconque des revendications 1 à 13, **caractérisé en ce qu'**une deuxième dérivation (30) est disposée entre les compartiments (12, 13), dérivation par laquelle les compartiments (12, 13) sont fluidiquement reliés, la dérivation pouvant être fermée par un deuxième élément de commande (29).
